# EUROPEAN PATENT APPLICATION

(11) **EP 0 540 995 A1**
(43) Date of publication of application: **12.05.1993**
(21) Application number: 92118390.1
(22) Date of filing: 28.10.1992
(51) Int. Cl.: A01C 5/06

(54) **Furrowing device for direct sowing**

(30) Priority: 04.11.1991 IT UD910185
(71) Applicant: GASPARDO SPA, I-33075 Morsano Al Tagliamento (PN) (IT)
(72) Inventor: Gaspardo, Luigi, I-33078 S. Vito Al Tagliamento (PN) (IT)
(74) Representative: Petraz, Gilberto Luigi

(57) **Abstract**

Furrowing device for direct sowing in terrains that are worked and not worked, which comprises a furrowing disk (11) borne by a first arm (26) secured to the operational machine in such a manner that it can oscillate, and comprises also means to adjust the depth of the furrow, a tubular coulter (24) and a furrow-closing means, which consists of a covering disk (13) positioned to the rear and side of the furrowing disk (11), the covering disk (13) being borne on a second oscillatory arm (15) and being pivoted and adjustable at least at an angle and being pressed resiliently (17) against the ground.

## Description

This invention concerns a single-disk furrowing device for direct sowing in terrains that are worked and not worked.

This invention is applied to operating machines employed for sowing in agriculture.

Furrowing devices are known which are suitable for direct sowing in terrains which are not worked. These devices have to be capable of being versatile and of working also for conventional sowing on terrains which are worked.

These devices comprise a single furrowing disk, which penetrates into the ground and causes a minimum displacement of earth, thus ensuring conservation of the ground with all the resulting benefits.

These known furrowing devices follow the ground and the profile of the earth with a constant penetration into the whole of the zone to be worked.

Each furrowing device of the state of the art is fitted to its operational machine independently on its own arm and includes furrow-closing wheels downstream of the furrowing disk.

The furrowing devices of the state of the art include: - a furrowing disk which makes the furrow for the seed by shifting a minimum quantity of earth; an independent wheel to regulate the depth, which besides regulating the depth normally assists in keeping the furrowing disk clean; a seed pushing wheel which is advantageously made of rubber and pushes the seed to the bottom of the furrow with an adjustable pressure; and one or more furrow-closing wheels which thrust the shifted earth towards the furrow to close the furrow.

This device of the state of the art, however, entails shortcomings as regards its cost, the great number of mechanical parts, the maintenance requirements, the time required for adjustments, its rear bulk, the single nature of the covering of the seeds, the scanty action of cutting any residues of tillage, etc.

The present applicants have tackled this problem and have found to their surprise a simpler furrowing device which, with a smaller number of parts and mechanical means, not only enables a sowing furrow to be produced which is at least equal to that produced with the state of the art, but also enables the roots and residues of tillage to be definitely sheared and the desired covering of the seed to be accomplished on any type of ground and with very short times for adjustment of the machine.

Further purposes and advantages will be disclosed and made clear in the following description.

The invention is set forth and characterized in the main claim, while the dependent claims describe variants of the idea of the embodiment.

According to the invention the furrowing device comprises a furrowing disk which works at a constant pre-set depth and cooperates with a single covering disk positioned to the rear and to the side so as to cooperate substantially with the other side of the furrow.

The covering disk is resiliently thrust against the ground with an adjustable resilient thrust, which is graduated advantageously in relation to the furrowing disk.

This resilient thrust may be graduated also in relation to the operational machine when the covering disk is fitted as a cantilever directly to the operational machine itself.

This covering disk, in relation to the horizontal plane including, or parallel to, the axis of lengthwise forward movement, is inclined by an angle of about minus ten degrees closing towards the rear, this inclination being of the same type as that of the furrowing disk.

The plus and minus signs relating to the angles of inclination detailed in this description indicate angles which are considered in relation to the vertex of two orthogonal axes which create four quarters, and to the sign which the angle has in those four quarters.

Thus, the angles opening out from the vertex of the first and third quarters will have a plus value, whereas the angles of the second and fourth quarters will have a minus value.

According to a variant this inclination can be adjusted within an angle between minus five degrees and minus twenty degrees, depending on the type of the ground and of the seed.

The covering disk is inclined, in relation to the vertical plane orthogonal to the axis of forward movement, by an angle of minus twenty degrees closing towards the ground so as to form an upwardly open "V" together with the furrowing disk.

According to a variant this inclination on the vertical plane orthogonal to the axis of forward movement can be adjusted between plus ten degrees and minus fifty degrees, depending on the type of the ground and of the seed.

The words "plus ten degrees" mean that the covering disk can take up even an angle located in the first quarter, like the angle of the furrowing disk.

The definition of the angles in the description and for the purposes of the description is determined by placing oneself at the rear and on the axis of lengthwise forward movement as regards the angle in relation to the vertical orthogonal plane, and above on the vertical plane as regards the angle in relation to the horizontal plane parallel to, or containing, the axis of lengthwise forward movement.

According to a further variant the covering disk is convex and can be dismantled and re-fitted after being rotated by 180°.

The value of the convexity of the covering disk is determined by the type of effect on the ground which is required of the covering disk.

Thus, the covering disk can be fitted in such a way that its working face is convex or concave so as to accomplish a further differentiation of the covering effect, thus making possible a further enlargement of the covering effect, depending on the ground and seed in question.

According to the invention the covering disk may have a diameter between 200 and 300 mm. when accompanying a furrowing disk having a diameter of about 440 to 450 mm.; in this case it is advantageous for the covering disk to have a diameter of about 220 mm.

The convexity of the covering disk may range from 5 mm. to 50 mm. in company with the diameter values detailed above.

According to a further variant the furrowing disk does not possess a continuous circumferential periphery but includes in its periphery a plurality of notches the edges of which are advantageously sharpened to produce sharp teeth, which improve the shearing of roots and of residues of tillage scattered in or on the ground.

According to the invention the furrowing disk is fitted at an angle of about minus three degrees to the horizontal plane parallel to, or including, the axis of lengthwise forward movement, whereas the furrowing disk lies at an angle of about plus two degrees to the vertical plane orthogonal to the axis of forward movement.

These angles, however, are merely indicational inasmuch as they depend on the type of furrow to be made and, in any event, are angles which are substantially well known.

According to a variant the furrowing disk is weighted so that it is directly burdened by the necessary weight to make it remain adherent to the ground and to counterbalance the shearing and covering thrusts.

According to another variant the weight can be replaced and/or supplemented.

According to a variant of the invention the weight has an outer circular form and is fitted to and coaxial with the furrowing disk.

The difference between the radius of the weight and the radius of the furrowing disk determines the constant depth of penetration of the furrowing disk.

The periphery of the weight can be smooth or may include notches to enhance its grip on the ground.

According to a variant the circumferential periphery of the weight may be coated with rubber or another suitable material, whether smooth or containing notches.

The weight can rotate together with the furrowing disk and is rested on an edge of the furrow.

This furrowing disk is borne on a first arm fitted to the operational machine in such a way as to be able to oscillate; a shock absorber working possibly with an adjustable pressure is included and cushions and controls the oscillations of the furrowing disk itself while the latter is running on the ground.

Let us now see a preferred embodiment of the invention with the help of the attached figures, which are given as a non-restrictive example as follows:-
- Fig.1: shows from the inner side a furrowing device according to the invention;
- Fig.2: shows from the outer side the device of Fig.1;
- Fig.3: shows a detail of the attachment of the covering disk shown in Fig.1;
- Figs.4: show the sowing steps according to the invention;
- Figs.5: are diagrams of the positions of the disks as seen from above (a) and on a horizontal plane from the rear (b).

In the attached figures a furrowing device 10 includes a furrowing disk 11 with teeth 12; the furrowing device 10 is sharpened peripherally

The furrowing disk 11 is supported on a first arm 26, which cooperates with a shock absorber 25 and can rotate on a first pivot 27.

The first arm 26 is borne on the operational machine in such a way that it can oscillate.

The first arm 26 bears at its rear a stationary plate 21, which in this example supports an adjustment plate 19 bearing a furrow-covering disk 13 and a support 22 for a first scraper 28.

The adjustment plate 19 is secured with bolts 20 to the stationary plate 21 and contains slots 34.

The furrowing disk 11 has a replaceable weight 30 firmly secured to the axis of the furrowing disk 11 and able to rotate therewith 11 in this case.

The diameter of the weight 30 determines the constant depth of cutting of the ground by the furrowing disk 11. If this diameter is varied without altering the diameter of the furrowing disk 11, the cutting depth is varied.

The width of the outer cylindrical strip of the weight 30 determines the pressure on the ground along the edge of the furrow 31.

The periphery of the weight 30 may include means to enhance its grip on the ground and may also include a rubber coating with engagement notches.

A seed feeder pipe 23 cooperates in a known manner with the furrowing disk 11 and is positioned with a supporting bracket 35 and cooperates with a known tubular coulter 24, which cooperates in forming a sowing furrow 31 and at the same time lays seeds 32 in the furrow 31.

The tubular coulter 24, while making the furrow 31, normally produces a heap of earth 33 at the side of the furrow 31 in a known manner.

As we said above, the adjustment plate 19 contains two slots 34, which enable the covering disk 13 to be adjusted at an angle both on the vertical plane orthogonal to the axis of forward movement and on the horizontal plane.

The slots 34, owing to their shape, make possible this angular displacement of the covering disk 13 and a lateral displacement as between the stationary plate 21 and the adjustment plate 19 and therefore also enable the covering disk 13 to be positioned laterally in relation to the furrowing disk 11 and therefore in relation to the furrow 31.

The adjustment plate 19 bears a second pivot 18 and, in this example, secures a third resilient arm 17.

The covering disk 13 is supported on a second oscillatory arm 15, which is pivoted so as to oscillate on the second pivot 18 and is pressed resiliently by the third resilient arm 17 against the ground.

According to a variant the second oscillatory arm 15 may be fitted directly to the operational machine so as to oscillate thereon.

The third resilient arm 17 can be adjusted, as regards its resilient thrust, on the second oscillatory arm 15 by means of a graduated sector 16 included on the second oscillatory arm 15.

A second scraper 29 to clean the covering disk 13 is also included on the second oscillatory arm 15.

The covering disk 13 is convex and is fitted to a rotary flange 14. The convexity is determined by the effect required and may range from about 5 mm. to about 50 mm. of depth from the inside to the outer edge of the convex disk 13.

In this example the covering disk 13 has a diameter of about a half of the diameter of the furrowing disk 11.

The convexity of the covering disk 13 enables the convex side or concave side of the covering disk 13 to be positioned as the working side according to the furrow covering requirements and the desired effect.

The flange 14 is borne in a known manner so as to be able to rotate on a pivot solidly fixed to the second arm 15; according to a variant this pivot can be fitted to a plate for possible angular adjustments on the horizontal or almost vertical plane. This plate may be of the same type as the adjustment plate 19 and be fitted to the second oscillatory arm 15.

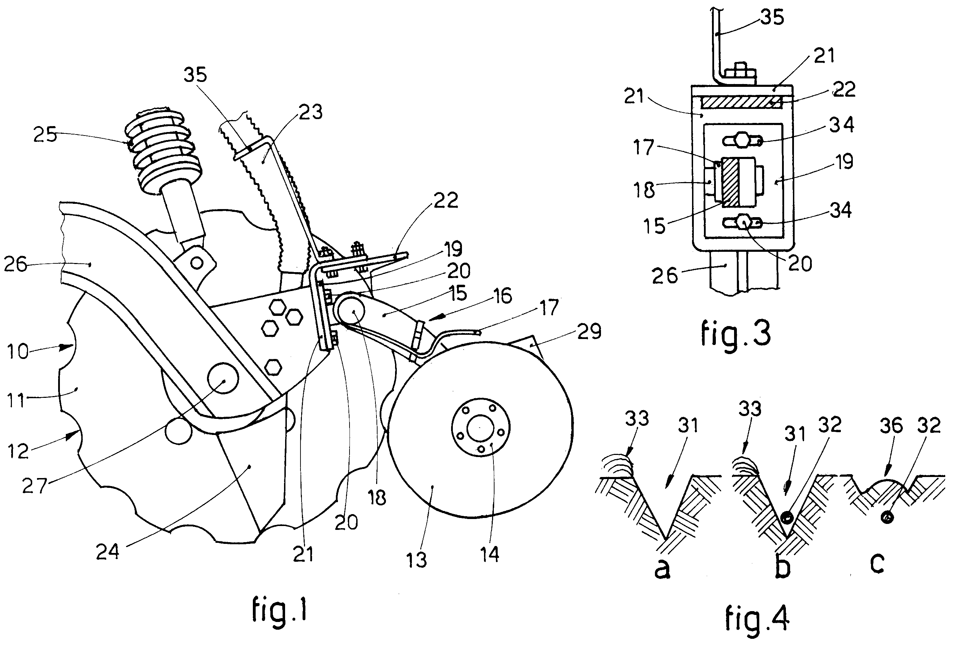

The furrowing disk 11 makes a first cut in the ground, and the tubular coulter 24 makes a furrow 31 (Fig.4a) while depositing a seed 32 and normally making a heap of earth 33 (Fig.4b) on the edge of the furrow 31 not pressed by the weight 30.

The covering disk 13 cooperates more or less widely with the earth 33 and covers the furrow 31, at the same time compacting the sides 36 (Fig.4c) of the furrow 31 by a desired value.

The compacting of the sides 36 is determined by the position of the convexity of the covering disk 13, by the horizontal and vertical inclination of the covering disk 13 and by the resilient thrust of the third resilient arm 17.

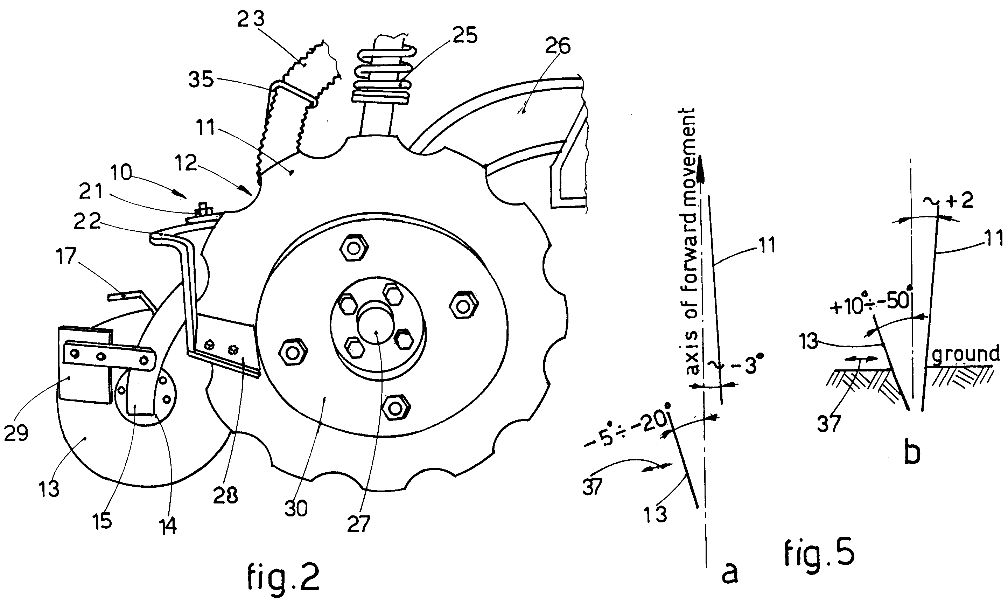

The furrowing 11 and covering 13 disks are shown in the diagrams of Figs.5 as being straight lines for the sake of simplicity.

The angles shown represent the approximate field of the adjustments provided for by the invention. The angles shown are obviously indicational for the furrowing disk 11.

For the covering disk 13 there is not only the possibility of angular adjustment on the vertical and horizontal orthogonal planes but also the possibility of sideways adjustment 37, which makes the covering disk 13 approach or depart from the vertical lengthwise plane containing the axis of forward lengthwise movement and substantially also the vertex of the furrow 31.

## Claims

1. Furrowing device for direct sowing in terrains that are worked and not worked, which comprises a furrowing disk (11) borne by a first arm (26) secured to the operational machine in such a manner that it can oscillate, and comprises also means to adjust the depth of the furrow, a tubular coulter (24) and a furrow-closing means, the device being characterized in that the furrow-closing means consists of a covering disk (13) positioned to the rear and side of the furrowing disk (11), the covering disk (13) being borne on a second oscillatory arm (15) and being pivoted and adjustable at least at an angle and being pressed resiliently (17) against the ground.

2. Device as in Claim 1, in which the second oscillatory arm (15) is pivoted on the first arm (26) that bears the furrowing disk (11).

3. Device as in Claim 1, in which the second oscillatory arm (15) is pivoted on the operational machine.

4. Device as in any claim hereinbefore, in which the covering disk (13) is positioned on the horizontal plane at an adjustable angle, which closes to a point in the backward direction, of between about minus five degrees and minus twenty degrees.

5. Device as in any claim hereinbefore, in which the covering disk (13) is positioned on the vertical plane orthogonal to the axis of forward movement at an adjustable angle between minus ten degrees and plus fifty degrees so as to form a "V" together with the furrowing disk (11).

6. Device as in any claim hereinbefore, in which the covering disk (13) can be adjusted sideways to the vertical plane containing the axis of lengthwise forward movement.

7. Device as in any claim hereinbefore, in which the covering disk (13) has a diameter between 200 mm. and 300 mm. when the furrowing disk (11) has a diameter of about 440/450 mm.

8. Device as in any claim hereinbefore, in which the covering disk (13) is convex and can be dismantled and refitted after having been rotated by 180°.

9. Device as in any claim hereinbefore, in which the covering disk (13) has a convexity of between 5 mm. and 50 mm.

10. Device as in any claim hereinbefore, in which the furrowing disk (11) includes teeth and has a sharp periphery.

11. Device as in any claim hereinbefore, in which the furrowing disk (11) cooperates with a weight (30) that acts directly on the furrowing disk (11).

12. Device as in any claim hereinbefore, in which the weight (30) has a substantially cylindrical outer shape and is fitted on the same axis as and rotates with the furrowing disk (11) alongside the same (11) on the opposite side to the covering disk (13).

13. Device as in any claim hereinbefore, in which the outer diameter of the weight (30) determines the depth of the furrow (31) and cooperates with the edge of the furrow (31). 14. Device as in any claim hereinbefore, in which the furrowing disk (11) and covering disk (13) have independent cleaning means (28-29).
